# EUROPEAN PATENT APPLICATION

(11) **EP 3 985 515 A1**
(43) Date of publication of application: **20.04.2022**
(21) Application number: 20826599.1
(22) Date of filing: 30.03.2020
(51) Int. Cl.: G06F 11/30

(54) **TRANSACTION MONITORING METHOD, APPARATUS AND SYSTEM FOR DISTRIBUTED DATABASE, AND STORAGE MEDIUM**

(30) Priority: 19.06.2019 CN 201910532401
(71) Applicant: ZTE Corporation, Shenzhen, Guangdong 518057 (CN)
(72) Inventor: ZHOU, Yayun, Shenzhen, Guangdong 518057 (CN); LIN, Pin, Shenzhen, Guangdong 518057 (CN); DING, Yan, Shenzhen, Guangdong 518057 (CN); LIU, Zhiwen, Shenzhen, Guangdong 518057 (CN)
(74) Representative: Betten & Resch
(86) International application number: PCT/CN2020/082210
(87) International publication number: WO 2020/253314

(57) **Abstract**

A transaction monitoring method for a distributed database, apparatus, system and storage medium are disclosed. The transaction monitoring method for a distributed database includes: after receiving an execution request for a transaction, recording transaction indication information carried in the execution request for the transaction; and, performing transaction monitoring according to the transaction indication information.

## Description

### CROSS-REFERENCE TO RELATED APPLICATION

The present application is based on and claims the priority to Chinese Patent Application 201910532401.4 filed on June 19, 2019, which is incorporated herein by reference in its entirety.

### TECHNICAL FIELD

The embodiments of the present application relate to, but not limited to, a transaction monitoring method and apparatus for a distributed database, system and a storage medium.

### BACKGROUND

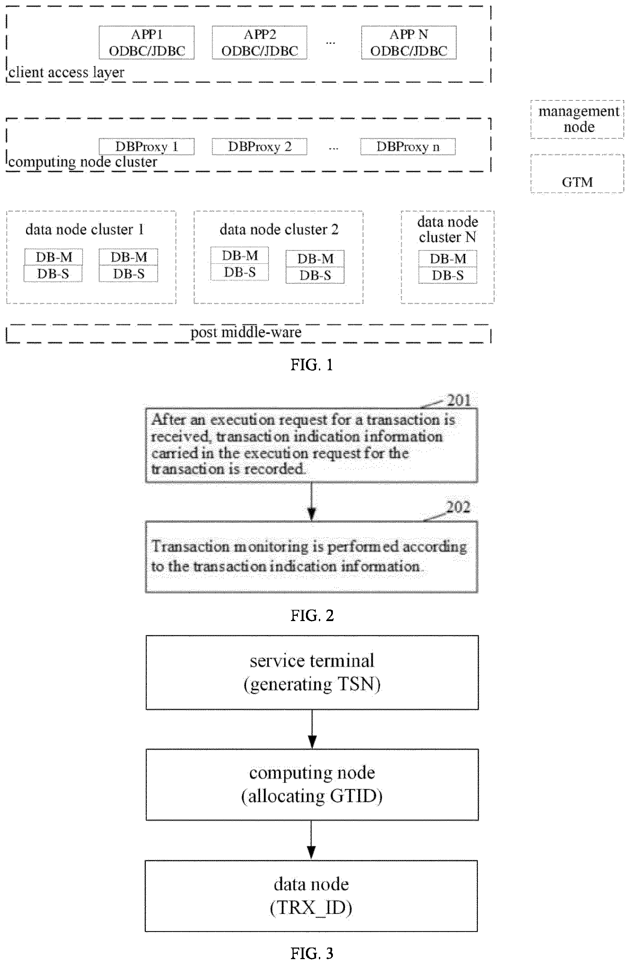

Distributed databases have become an important direction of database development. The overall architecture of a distributed database GoldenDB is shown in FIG. 1. The description will be given below in conjunction with FIG. 1.

The service terminal (i.e., client access layer) consists of a plurality of applications (APPs), and supports universal open database connectivity (ODBC) and Java Database connectivity (JDBC) interfaces. The user uses the distributed database through the client access layer.

The computing node cluster consists of a plurality of middle-wares DBProxy (DB proxy nodes), and SQL statements perform basic processing and distribution in computing nodes.

The management node includes a plurality of components, for example, an operation maintenance module (OMM) server, a meta data server (MDS), a proxy manager (PM), a cluster manager (CM), etc., and is configured to manage and secure the distributed database system.

The global transaction manager (GTM) is mainly configured to generate and maintain the global transaction identities (IDs) of distributed transactions.

The data node cluster consists of a plurality of database groups (DB-DROUP), each of which consists of one master database and one (or more) standby databases.

The post middle-ware mainly monitors, backs up and restores data nodes, or the like.

At present, there are many monitoring measures for standalone databases, for example, performance_schema monitoring of MySQL, master/standby copy state monitoring, etc. However, for a large-scale distributed database system where the service terminals, the computing nodes and the data nodes are separated from each other, the requirements for operation, maintenance and management of the distributed database cannot be satisfied by monitoring the data nodes alone.

### SUMMARY

At least one embodiment of the present application provides a transaction monitoring method and apparatus for a distributed database, a system and a storage medium.

At least one embodiment of the present application provides a transaction monitoring method for a distributed database, including: in response to receive an execution request for a transaction, recording transaction indication information carried in the execution request for the transaction; and, performing transaction monitoring according to the transaction indication information.

At least one embodiment of the present application provides a transaction monitoring method for a distributed database, including: transmitting an execution request for a transaction by a node, transaction indication information being carried in the execution request for the transaction.

At least one embodiment of the present application provides a transaction monitoring system for a distributed database, including: a data node configured to, in response to receive an execution request for a transaction, record transaction indication information carried in the execution request for the transaction; and, a management node configured to perform transaction monitoring according to the transaction indication information.

At least one embodiment of the present application provides a transaction monitoring apparatus for a distributed database, including a memory and a processor, the memory storing program which, when read and executed by the processor, causes the processor to perform the transaction monitoring method for a distributed database described in any one of the embodiments.

At least one embodiment of the present application provides a computer-readable storage medium storing one or more programs which, when executed by one or more processors, cause the one or more processor to perform the transaction monitoring method for a distributed database described in any one of the embodiments.

Other features and advantages of the present application will be explained in the following specification, and will partially become apparent from the specification or be appreciated by implementing the present application. The objectives and other advantages of the present application can be realized and obtained by the structures specified in the specification, the appended claims and the accompanying drawings.

### BRIEF DESCRIPTION OF DRAWINGS

The accompanying drawings are provided for further understanding of the technical schemes of the present application and constitute a part of this specification. The accompanying drawings, together with the embodiments of the present application, serve to explain, rather than limit the technical schemes of the present application, in which:
FIG. 1 is an overall architecture diagram of a distributed database;
FIG. 2 is a flowchart of a transaction monitoring method for a distributed database according to an embodiment of the present application;
FIG. 3 is a hierarchical diagram of core information of a transaction in a distributed database;
FIG. 4 is a flowchart of a transaction monitoring method for a distributed database according to an embodiment of the present application;
FIG. 5 is a flowchart of an execution process of a data node according to an embodiment of the present application;
FIG. 6 is an implementation flowchart of a deadlock transaction analysis scheme according to an embodiment of the present application;
FIG. 7 is an implementation flowchart of a distributed transaction abnormality handling scheme according to an embodiment of the present application;
FIG. 8 is a flowchart of a transaction monitoring method for a distributed database according to an embodiment of the present application;
FIG. 9 is a block diagram of a transaction monitoring system for a distributed database according to an embodiment of the present application;
FIG. 10 is a block diagram of a transaction monitoring apparatus for a distributed database according to an embodiment of the present application; and
FIG. 11 is a block diagram of a computer-readable storage medium according to an embodiment of the present application.

### DETAILED DESCRIPTION

In order to make the objectives, technical schemes and advantages of the present application clearer, the embodiments of the present application will be described in detail below in conjunction with the accompanying drawings. It is to be noted that the embodiments in the present application and the features in the embodiments can be arbitrarily combined with each other if not conflicted.

The steps shown in the flowcharts in the accompanying drawings can be executed in a computer system, for example, a set of computer-executable instructions. In addition, although a logic order is shown in the flowcharts, in some cases, the steps shown or described may be executed in an order different from this logic order.

In an ordinary distributed database system, when an abnormity occurs in a data node, it is impossible to directly locate the service terminal source of the abnormal transaction, and it is also impossible to directly handle distributed global transaction abnormities.

As shown in FIG. 2, an embodiment of the present application provides a transaction monitoring method for a distributed database, including the following steps.

At step S201, after an execution request for a transaction is received, transaction indication information carried in the execution request for the transaction is recorded.

The execution request for the transaction may be any one or more of a first to Nth statements of the transaction, or may be a management command before the first statement. The statement may be a sql statement.

At step S202, transaction monitoring is performed according to the transaction indication information.

In accordance with the scheme provided by this embodiment of the present application, by recording transaction indication information, it is convenient to locate a transaction using the transaction indication information, and the operation and maintenance means of the distribution database are enhanced, so that the operation and maintenance efficiency of the distributed database can be effectively improved, and the process of handling distributed transaction abnormities can be greatly simplified.

The transaction indication information is identity information of the transaction. The transaction indication information may be a transaction serial number (TSN: trx serial num), or a global transaction identity (GTID: global trx ID), or a transaction serial number and a global transaction identity. It is to be noted that, the use of the TSN and the global transaction ID is only an example, and other identity information capable of indicating the transaction or newly defined information can be used as required.

For a hierarchical structure of the distributed database, each layer has corresponding core transaction information, as shown in FIG. 3, including the following.

Transaction serial number information: it is generated by the service terminal, and the service source of the transaction can be traced by using the transaction serial number. In the existing technology, for a computing node and a data node, the TSN information is invisible, so it is impossible to trace the service source of the transaction in the data node. In an embodiment, by carrying a transaction serial number in an execution request for a transaction, the data node can trace the service source of the transaction using the service serial number.

Global transaction ID information of the transaction: it is generated at the computing node and can uniquely identify a transaction. In an embodiment, the global transaction ID is carried in the execution request for the transaction to realize distributed global transaction abnormity handling.

Transaction ID (TRX_ID): it is generated at the data node, and is the real execution information of the transaction and the related information thereof. For a distributed database system, the requirements of the distributed database cannot be satisfied by only analyzing the transaction condition of a single data node.

It is to be noted that the use of the transaction serial number and/or global transaction ID as the transaction indication information is only an example.

In an embodiment, both the TSN and the global transaction ID are used as the transaction indication information, and transmitted to the data node through the execution request. The data node records the TSN and the global transaction ID, and performs transaction monitoring according to the TSN and the global transaction ID. Specifically, the service terminal transmits the TSN to the computing node, and the computing node transmits the TSN and the global transaction ID to the data node. In accordance with the scheme provided in this embodiment, a full link monitoring of the distributed database at the data node can be realized.

In another embodiment, the TSN is used as the transaction indication information, and transmitted to the data node through the execution request. The data node records the TSN, and performs transaction monitoring according to the TSN. Specifically, the service terminal transmits the TSN to the computing node, and the computing node transmits the TSN to the data node.

In another embodiment, the global transaction ID is used as the transaction indication information, and transmitted to the data node through the execution request. The data node records the global transaction ID, and performs transaction monitoring according to the global transaction ID. Specifically, the computing node transmits the global transaction ID to the data node.

An association relationship between the transaction identity of the transaction in the data node of the distributed database and the transaction indication information of the transaction is recorded. That is, in the process of recording the TSN and the global transaction ID, the TSN and the global transaction ID are associated with the TRX_ID.

After the TSN information and the global transaction ID information are parsed, each transaction will generate one date record, which mainly includes the TRX_ID, the TSN, the global transaction ID or other information, and is written into an internal temporary table of the database. A management node can acquire the TSN information and the global transaction ID information in the internal temporary table by an SQL query statement.

When a transaction of the data node is abnormal, the service source of the transaction can be traced according to the TSN, so as to analyze the root cause of the abnormity of the data node, and then solve this abnormity. By associating the distributed global transaction ID on the data node, the distributed global transaction ID can be used to handle the abnormity of the distributed global transaction.

In an embodiment, the performing transaction monitoring according to the transaction indication information includes a following step.

When a transaction is abnormal, a service source of the transaction is determined according to the transaction serial number of the transaction. Specifically, the TRX_ID of the abnormal transaction is acquired, and the service source of the transaction is determined according to the transaction serial number associated with the TRX_ID.

In an embodiment, the performing transaction monitoring according to the transaction indication information includes a following step.

When a transaction is abnormal, a transaction identity of the abnormal transaction is determined according to the global transaction identity of the abnormal transaction. For example, when it is monitored that a transaction is abnormal, the TRX_ID is determined according to the GTID of the transaction, and then the transaction indicated by the corresponding TRX_ID in the data node can be handled.

In an embodiment, the transaction indication information in the execution request for the transaction is carried in a preset annotation format. In an embodiment, the transaction indication information is added to a sql statement in the transaction in a preset annotation format shown by /^{∗}+^{∗}/ and added in the form of HINT information. The HINT information will be parsed and cached in a thread thd, and the sql execution process will not be affected by the HINT information. In an embodiment, the TSN information is in the format of /^{∗}+TSN=?^{∗}/. The service source of the transaction can be directly traced by the TSN information associated with the transaction. The GTID information is in the format of /^{∗}+GTID=?^{∗}/. The distributed transaction abnormity can be directly handled according to the GTID by using the GTID information associated with the transaction when the transaction is abnormal. It is to be noted, the above formats are only examples, and other formats may also be used as required.

Compared with the existing technology, by using the technology described in the embodiments of the present application, the full link monitoring of the distributed transaction can be realized at the data node, and the distributed transaction abnormity can be automatically handled when the distributed transaction is abnormal.

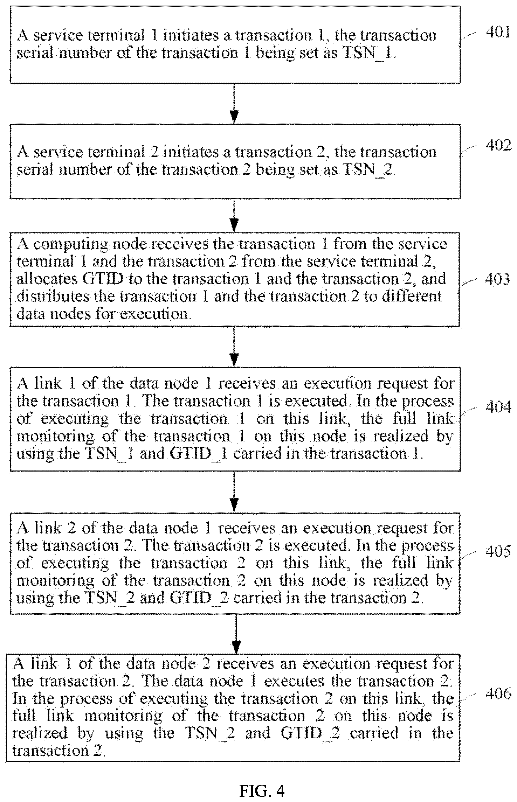

An embodiment of the present application provides a transaction monitoring method for a distributed database, as shown in FIG. 4, including the following steps.

At step S401, a service terminal 1 initiates a transaction 1. The transaction serial number of the transaction 2 is set as TSN_1.

At step S402, a service terminal 2 initiates a transaction 2. The transaction serial number of the transaction 2 is set as TSN_2.

At step S403, a computing node receives the transaction 1 from the service terminal 1 and the transaction 2 from the service terminal 2, and allocates GTID to the transaction 1 and the transaction 2. The GTID of the transaction 1 being set as GTID_1, and the GTID of the transaction 2 is set as GTID_2. The transaction 1 and the transaction 2 are distributed to different data nodes for execution.

At step S404, a link 1 of the data node 1 receives an execution request for the transaction 1. The transaction 1 is executed. In the process of executing the transaction 1 on this link, the full link monitoring of the transaction 1 on this node is realized by using the TSN_1 and GTID_1 carried in the transaction 1.

At step S405, a link 2 of the data node 1 receives an execution request for the transaction 2. The transaction 2 is executed. In the process of executing the transaction 2 on this link, the full link monitoring of the transaction 2 on this node is realized by using the TSN_2 and GTID_2 carried in the transaction 2.

At step S406, a link 1 of the data node 2 receives an execution request for the transaction 2. The data node 2 executes the transaction 2. In the process of executing the transaction 2 on this link, the full link monitoring of the transaction 2 on this node is realized by using the TSN_2 and GTID_2 carried in the transaction 2.

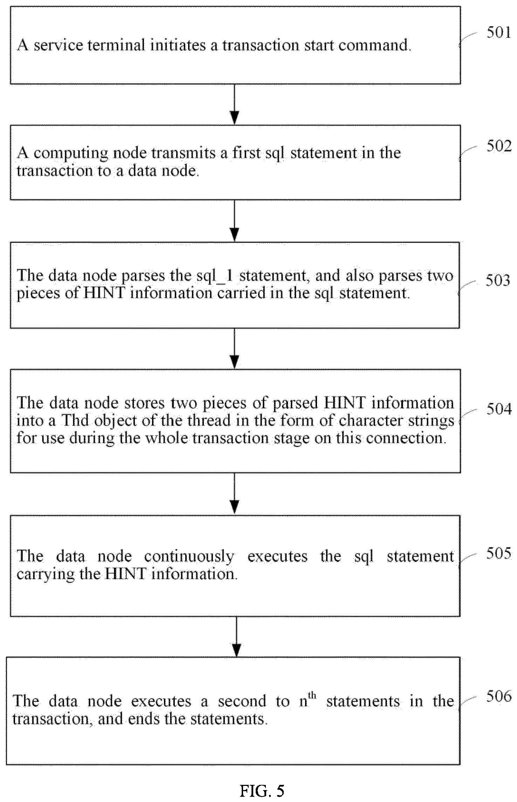

The detailed processing process of a transaction at a data node is shown in FIG. 5, including the following steps.

At step S501, a service terminal initiates a transaction start command.

At step S502, a computing node transmits a first sql statement in the transaction to a data node. This sql statement carries transaction serial number (TSN) information (a piece of HINT information) and global transaction identity (GTID) information (another piece of HINT information).

At step S503, the data node parses the sql_1 statement, and also parses the two pieces of HINT information carried in the sql statement.

At step S504, the data node stores two pieces of parsed HINT information into a Thd object of the thread in the form of character strings for use during the whole transaction stage on this connection.

At step S505, the data node continuously executes the sql statement carrying the HINT information, i.e., the first statement.

At step S506, the data node executes a second to nth statements in the transaction, and ends the statements.

It is to be noted that the second to nth statements may or may not carry the HINT information.

At steps S505 to S506, the data node monitors the transaction information received by the data node. Specifically, the transaction id information of the data node and its associated transaction serial number (TSN) are recorded; the transaction id information of the data node and its associated global transaction (GTID) information are recorded; and, the transaction id information of the data node and its own related information such as lock, execution of sql statements and execution time are recorded.

At steps S505 to S506, when an abnormity occurs, the data node directly locates the service source of the transaction by using the TSN information associated with the transaction id; and, by using the GTID information associated with the transaction id, the data node directly handles the distributed global transaction abnormity by using the GTID.

The schemes of the present application will be described below by specific embodiments.

### Embodiment 1

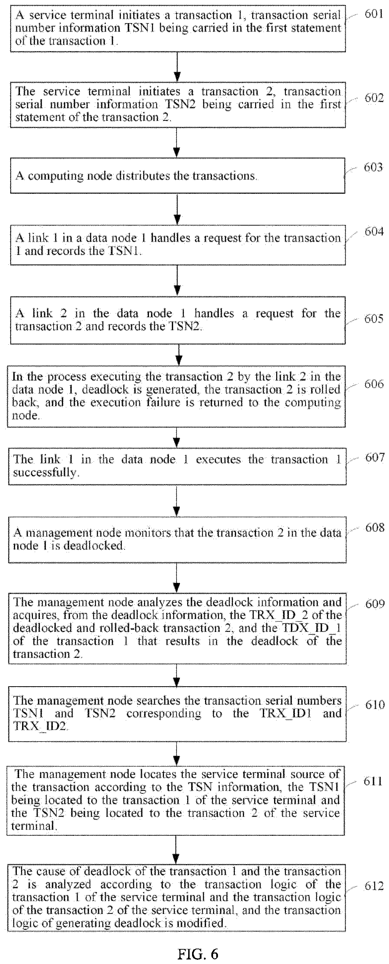

This embodiment provides an implementation of deadlock transaction analysis. During the deadlock transaction analysis, the service source of the transaction is traced by the TSN information associated with the transaction, so that the operation and maintenance efficiency of the distributed database is effectively improved. The technical implementation process is shown in FIG. 6, and the detailed description will be given below.

At step S601, a service terminal initiates a transaction 1. Transaction serial number information TSN1 is carried in a first statement of the transaction 1.

At step S602, the service terminal initiates a transaction 2. Transaction serial number information TSN2 is carried in a first statement of the transaction 2.

At step S603, a computing node distributes the transactions.

At step S604, a link 1 in a data node 1 handles a request for the transaction 1 and records the TSN1.

At step S605, a link 2 in the data node 1 handles a request for the transaction 2 and records the TSN2.

At step S606, in the process executing the transaction 2 by the link 2 in the data node 1, deadlock occurs, the transaction 2 is rolled back, and an execution failure is returned to the computing node.

At step S607, the link 1 in the data node 1 executes the transaction 1 successfully.

At step S608, a management node monitors that the transaction 2 in the data node 1 is deadlocked.

At step S609, the management node analyzes deadlock information and acquires, from the deadlock information, the TRX_ID_2 of the deadlocked and rolled-back transaction 2, and the TDX_ID_1 of the transaction 1 that results in the deadlock of the transaction 2.

At step S610, the management node searches the transaction serial numbers TSN1 and TSN2 corresponding to the TRX_ID1 and TRX_ID2.

The management node can acquire, from an internal temporary table of the database, a record related to the TRX_ID1 with SQL query statement. This record includes the TSN information corresponding to the transaction.

At step S611, the management node locates the service terminal source of the transaction according to the TSN information. The TSN1 is located to the transaction 1 of the service terminal, while the TSN2 is located to the transaction 2 of the service terminal.

At step S612, the cause of deadlock of the transaction 1 and the transaction 2 is analyzed according to a transaction logic of the transaction 1 of the service terminal and a transaction logic of the transaction 2 of the service terminal. The transaction logic causing the deadlock is modified to complete the analysis and solution of the deadlock problem.

It is to be noted that, step S612 may be completed automatically by the management node or completed manually. That is, it is only needed to output the service terminal source of the transaction in step S611, and the subsequent abnormal handling is completed manually.

### Embodiment 2

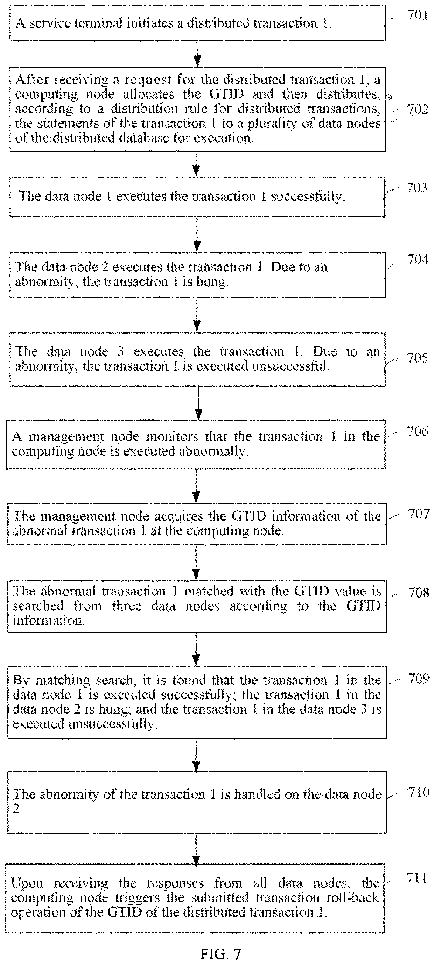

This embodiment provides an implementation of distributed transaction abnormity handling. In this embodiment, a transaction of a data node records transaction indication information, and performs distributed transaction abnormity handling through the GTID information associated with the transaction, thereby greatly simplifying the distributed transaction abnormity handling process. The technical implementation process is shown in FIG. 7, which includes the following steps.

At step S701, a service terminal initiates a distributed transaction 1.

At step S702, after receiving a request for the distributed transaction 1, a computing node allocates the global transaction ID (GTID) and then distributes, according to a distribution rule for distributed transactions, statements of the transaction 1 to a plurality of data nodes of the distributed database for execution.

At step S703, the data node 1 executes the transaction 1 successfully.

At step S704, the data node 2 executes the transaction 1. Due to an abnormity, the transaction 1 is hung (hanging, the transaction neither returns Successful nor Failed).

At step S705, the data node 3 executes the transaction 1. Due to an abnormity, the transaction 1 is executed unsuccessfully.

At step S706, a management node monitors that the transaction 1 in the computing node is executed abnormally (a success/failure response is not explicitly returned, and the execution time is too long).

At step S707, the management node acquires the GTID information of the abnormal transaction 1 at the computing node.

At step S708, the abnormal transaction 1 matched with the GTID value is searched from three data nodes according to the GTID information.

In the existing technology, it is impossible to directly determine a transaction in a data node according to the GTID (in the existing technology, there are only the TRX_ID of the transaction in the data node, but no GTID, so it is impossible to correspond the GTID to the transaction in the data node), so it is necessary to search the abnormal transaction 1 in the data node manually. However, in this embodiment, it is only necessary to search the transaction matched with the GTID, so that the operation and maintenance efficiency is improved.

At step S709, through matching search, it is found that the transaction 1 in the data node 1 is executed successfully; the transaction 1 in the data node 2 is hung; and the transaction 1 in the data node 3 is executed unsuccessfully.

At step S710, the abnormity of the transaction 1 is handled on the data node 2, for example, killing query, etc.

At step S711, after receiving the responses from all data nodes, the computing node triggers the submitted transaction roll-back operation of the GTID of the distributed transaction 1.

Since the transactions in the data node 2 and the data node 3 are executed unsuccessfully, it is only necessary to execute, on the data node 1, the submitted transaction roll-back operation of the transaction 1.

Now, the abnormity handling of the distributed transaction is completed. By associating the TRX_ID of the data node with the GTID information, the abnormity handling process of the distributed transaction is simplified.

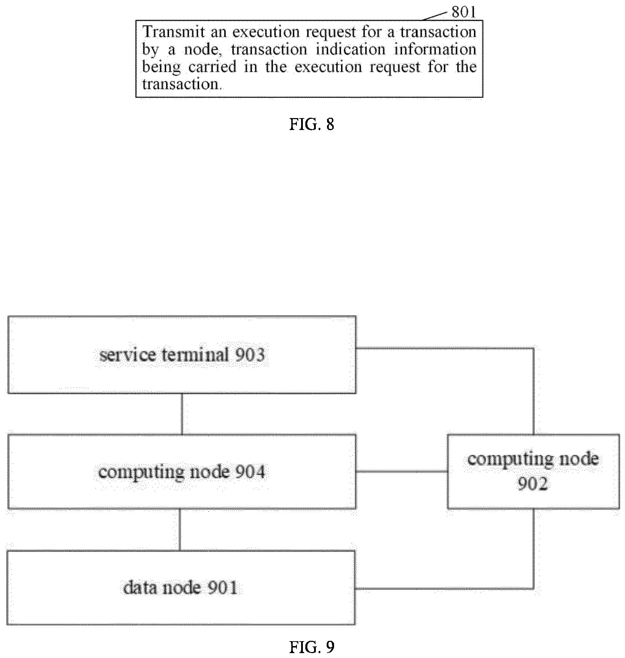

As shown in FIG. 8, an embodiment of the present application provides a transaction monitoring method for a distributed database, including the following step.

At step S801, a node transmits an execution request for a transaction. Transaction indication information is carried in the execution request for the transaction.

In an embodiment, the node is a service terminal of the distributed database, and the transaction indication information is a transaction serial number. Alternatively, the node is a computing node of the distributed database, and the transaction indication information is a global transaction identity.

As shown in FIG. 9, an embodiment of the present application provides a transaction monitoring system for a distributed database. It includes the following nodes.

A data node 901 is configured to record transaction indication information carried in the execution request for the transaction after receiving an execution request for a transaction.

A management node 902 is configured to perform transaction monitoring according to the transaction indication information.

In an embodiment, the transaction monitoring system further includes a service terminal 903 configured to transmit the execution request for the transaction. The transaction indication information is carried in the execution request for the transaction.

In an embodiment, the transaction monitoring system further includes a computing node 904 configured to transmit the execution request for the transaction to the data node 901. The transaction indication information is carried in the execution request for the transaction.

In an embodiment, the management node 902 performing transaction monitoring according to the transaction indication information includes at least one of the following.

When a transaction is abnormal, the management node 902 determines a service source of the transaction according to a transaction serial number in the transaction indication information.

When a transaction is abnormal, the management node 902 determines the abnormal transaction in the data node according to a global transaction identity of the abnormal transaction.

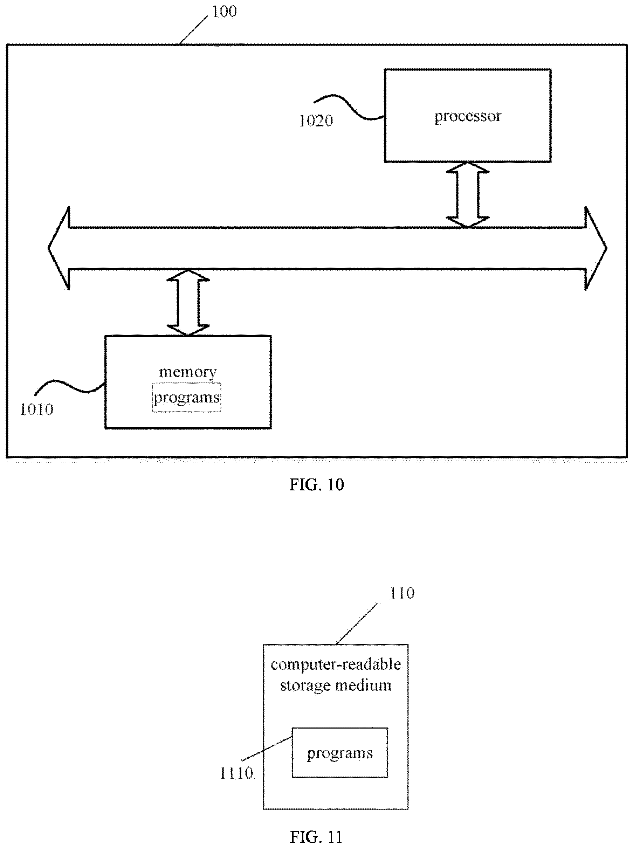

As shown in FIG. 10, an embodiment of the present application provides a transaction monitoring apparatus 100 for a distributed database, including a memory 1010 and a processor 1020. The memory 1010 stores program which, when read and executed by the processor 1020, causes the processor 1020 to perform the transaction monitoring method for the distributed database described in any one of the embodiments.

As shown in FIG. 11, an embodiment of the present application provides a computer-readable storage medium 110 storing one or more programs 1110 which, when executed by one or more processors, cause the one or more processors to perform the transaction monitoring method for the distributed database described in any one of the embodiments.

It should be understood by a person having ordinary skill in the art that, all or some of the steps in the methods described above and the functional modules/units in the systems and apparatuses described above can be implemented as software, firmware, hardware and suitable combinations thereof. In the hardware implementation, the division of the functional modules/units mentioned above does not necessarily correspond to the division of physical components. For example, one physical component may have a plurality of functions, or one function or step may be cooperatively executed by a number of physical components. Some or all of the components may be implemented as software executed by processors such as digital signal processors or microprocessors, or implemented as hardware, or implemented as integrated circuits such as application-specific integrated circuits. Such software may be distributed on a computer-readable medium, and the computer-readable medium may include computer storage mediums (or non-temporary mediums) and communication mediums (or temporary mediums). As well-known to a person having ordinary skill in the art, the term computer storage medium includes volatile or non-volatile and removable or non-removable mediums implemented in any method or technology used for storing information (e.g., computer-readable instructions, data structures, program modules or other data). The computer storage mediums include, but not limited to, RAMs, ROMs, EEPROMs, flash memories or other memory technologies, CD-ROMs, digital video disks (DVDs) or other optical disk storages, magnetic cassettes, magnetic tapes, magnetic disk storages or other magnetic storage devices, or any other mediums which can be used to store desired information and can be accessed by computers. In addition, as well-known to a person having ordinary skill in the art, the communication mediums generally contain computer-readable instructions, data structures, program modules or other data in modulation data signals such as carriers or other transmission mechanisms, and may include any information transfer mediums.

## Claims

1. A transaction monitoring method for a distributed database, comprising:
in response to receive an execution request for a transaction, recording transaction indication information carried in the execution request for the transaction; and
performing transaction monitoring according to the transaction indication information.

2. The transaction monitoring method for the distributed database of claim 1, wherein the recording transaction indication information carried in the execution request for the transaction comprises: recording an association relationship between a transaction identity of the transaction in a data node of the distributed database and the transaction indication information of the transaction.

3. The transaction monitoring method for the distributed database of claim 1, wherein the transaction indication information comprises at least one of: a transaction serial number generated by a service terminal of the distributed database, and a global transaction identity generated by a computing node of the distributed database.

4. The transaction monitoring method for the distributed database of claim 3, wherein the performing transaction monitoring according to the transaction indication information comprises:
in response to a transaction being abnormal, determining a service source of the transaction according to the transaction serial number of the transaction.

5. The transaction monitoring method for the distributed database of claim 3, wherein the performing transaction monitoring according to the transaction indication information comprises:
in response to a transaction being abnormal, determining the abnormal transaction in the data node according to the global transaction identity of the abnormal transaction.

6. The transaction monitoring method of any one of claims 1 to 5, wherein the transaction indication information in the execution request for the transaction is carried in a preset annotation format.

7. A transaction monitoring method for a distributed database, comprising:
transmitting an execution request for a transaction by a node, wherein transaction indication information is carried in the execution request for the transaction.

8. The transaction monitoring method for the distributed database of claim 7, wherein the node is a service terminal of the distributed database, and the transaction indication information is a transaction serial number; or, the node is a computing node of the distributed database, and the transaction indication information is a global transaction identity.

9. A transaction monitoring system for a distributed database, comprising:
a data node configured to, in response to receive an execution request for a transaction, record transaction indication information carried in the execution request for the transaction; and
a management node configured to perform transaction monitoring according to the transaction indication information.

10. The transaction monitoring system for the distributed database of claim 9, wherein the transaction monitoring system further comprises a service terminal configured to transmit the execution request for the transaction, wherein the transaction indication information is carried in the execution request for the transaction.

11. The transaction monitoring system for the distributed database of claim 9, wherein the transaction monitoring system further comprises a computing node configured to transmit the execution request for the transaction to the data node, wherein the transaction indication information is carried in the execution request for the transaction.

12. The transaction monitoring system for the distributed database of claim 9, wherein the management node performing transaction monitoring according to the transaction indication information comprises at least one of:
in response to a transaction being abnormal, the management node determines a service source of the transaction according to a transaction serial number in the transaction indication information; and
in response to a transaction being abnormal, the management node determines the abnormal transaction in the data node according to a global transaction identity of the abnormal transaction.

13. A transaction monitoring apparatus for a distributed database, comprising a memory and a processor, wherein the memory stores program which, when read and executed by the processor, cause the processor to perform the transaction monitoring method for the distributed database of any one of claims 1 to 8.

14. A computer-readable storage medium storing one or more programs which, when executed by one or more processors, cause the one or more processors to perform the transaction monitoring method for the distributed database of any one of claims 1 to 8.
